Europäisches Patentamt

European Patent Office

Office européen des brevets

(19)

(11) EP 1 647 746 A1

(12) **EUROPEAN PATENT APPLICATION**

(43) Date of publication:
   **19.04.2006 Bulletin 2006/16**

(51) Int Cl.:
   *F16J 15/32* (2006.01)   *F16J 15/56* (2006.01)
   *F04B 53/14* (2006.01)

(21) Application number: **05022078.9**

(22) Date of filing: **11.10.2005**

(84) Designated Contracting States:
   **AT BE BG CH CY CZ DE DK EE ES FI FR GB GR
   HU IE IS IT LI LT LU LV MC NL PL PT RO SE SI
   SK TR**
   Designated Extension States:
   **AL BA HR MK YU**

(30) Priority: **13.10.2004 JP 2004298843**

(71) Applicant: **Carl Freudenberg KG
   69469 Weinheim (DE)**

(72) Inventors:
   • **Nakao, Masahi
     Aso-shi
     869-2231 Kumamoto (JP)**
   • **Shinichi, Iwamoto
     Aso-shi
     869-2231 Kumamoto (JP)**
   • **Suetsugu, Naohito
     Aso-shi
     869-2231 Kumamoto (JP)**

(54) **Sealing ring for reciprocating movement**

(57)   The invention provides a sliding ring for a reciprocating movement achieving a low friction with respect to a sliding property. In a sealing ring (21) for a reciprocating movement, held by one of two members which move with respect to each other, slidably closely contacting the other member, and having a tip sliding portion (23) slidably closely contacting the other member and having a circular sectional shape, assuming a curvature radius of the tip sliding portion (23) is R, and an axial-direction width of the sealing ring (21) is A, the sealing ring has a shape which satisfies the following relation: $A/2 < R < 13A^2$.

**Fig. 6**

SEALING RING
21
B
R
A
22    23
D
LEADING END SLIDING PORTION

EP 1 647 746 A1

**Description**

BACKGROUND OF THE INVENTION

Field of the Invention

The present invention relates to a sealing ring in accordance with a sealing technique, and more particularly to a sealing ring suitable for being used in a reciprocating seal. The sealing ring in accordance with the present invention is used, for example, in a field of a motor vehicle, an industrial machine or the like.

Description of the Related Art

In the field of the motor vehicle, the industrial machine or the like, a squeeze packing such as an O-ring, a D-ring or the like is frequently used as the sealing ring for the reciprocating movement. However, the D-ring having a S-shaped cross section is more frequently used because a torsion is less generated in the D-ring than in the O-ring and a cost is smaller (refer to Japanese Unexamined Utility Model Publication No. 04-84863).
However, in both cases, in view of a resource saving and an energy saving, a low friction with respect to a sliding property is required in the sealing ring for the reciprocating movement.

SUMMARY OF THE INVENTION

Taking the matter mentioned above into consideration, an object of the present invention is to provide a sealing ring for a reciprocating movement which can achieve a low friction with respect to a sliding property, and has a high durability, thereby contributing to a resource saving and an energy saving. In order to achieve the object mentioned above, in accordance with the present invention, there is provided a sealing ring for a reciprocating movement, held by one of two members which move with respect to each other, slidably closely contacting the other member, and having a tip sliding portion slidably closely contacting the other member and having a circular sectional shape, wherein assuming a curvature radius of the tip sliding portion is R, and an axial-direction width of the sealing ring is A, the sealing ring has a shape which satisfies the following relation: $A/2 < R < 13A^2$.
The sealing ring in accordance with the present invention provided with the structure mentioned above is worked out as a result of the following devoted research by the inventors of the present invention.

BRIEF DESCRIPTION OF THE DRAWINGS

Fig. 1 is an explanatory view of a hydraulic servo vibration testing machine used for an experiment in accordance with the present invention;
Fig. 2 is an enlarged cross sectional view of a main portion of the testing machine;
Fig. 3 is an explanatory view showing a test sample used in the experiment;
Fig. 4 is an explanatory view showing a friction wave shape in the experiment;
Fig. 5 is an explanatory view showing a relation between an average friction coefficient and a lubricating property number in the experiment; and
Fig. 6 is a half cut cross sectional view of a sealing ring in accordance with an embodiment of the present invention.

DESCRIPTION OF THE PREFERRED EMBODIMENT

1) Prelude

In a sealing ring such as an O-ring, a D-ring, a rubber packing or the like used for a reciprocating seal for a motor vehicle and an industrial machine, a low friction is required in view of a resource saving and an energy saving. Accordingly, in order to explore the low friction of the seal, a friction property (Stribeck curve) of the D-ring is researched.

2) Experimenting method

2-1) Experimenting apparatus and experimenting method

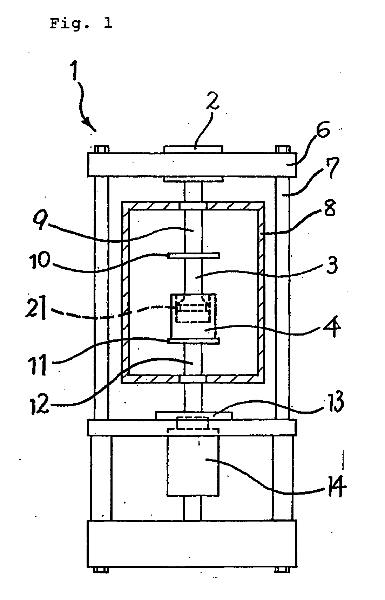

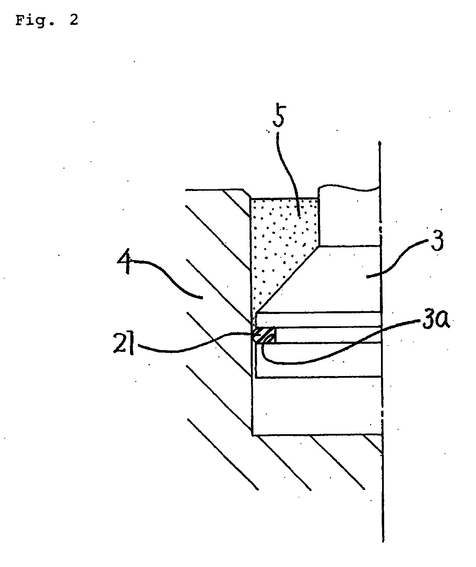

The experiment is executed by utilizing a hydraulic servo vibration tester 1 shown in Fig. 1. In other words, a sliding portion is constituted by a fixed inner tube 3 connected to a load cell for measuring a friction force, and a cylinder 4 reciprocating vertically in accordance with a sine wave. As shown in Fig. 2 in an enlarged manner, a D-ring 21 is installed to an installation groove 3a of the fixed inner tube 3, and a compression (a collapsing amount) of the D-ring 21 is set so as to target 0.37 mm by the cylinder 4 (a general collapsing amount is between 8 and 30 %). A lubricating fluid 5 is filled in one side of the D-ring 21. In this case, in Figs. 1 and 2, reference numeral 6 denotes a cross head, reference numeral 7 denotes a support column, reference numeral 8 denotes a constant temperature bath, reference numeral 9 denotes a shaft (in an upper side), reference numerals 10 and 11 denote a flange, reference numeral 12 denotes a shaft (in a lower side), reference numeral 13 denotes a cylinder, and reference numeral 14 denotes a vibration exciter, respectively.

The experiment is executed by fixing a stroke to 6 mm and changing a cycle number in a range between 0.05 and 2.5 Hz, under a temperature of 40°C. Three kinds of oils are employed for the lubricating fluid. Properties thereof are shown in Table 1.

**Table 1. Lubricating Fluid**

| Kind | Dynamic Viscosity ($mm^2/s$) | | Density |
|------|------|------|------|
| | 40°C | 100°C | 15°C |
| A | 34.12 | 5.55 | 0.873 |
| B | 325.1 | 24.55 | 0.901 |
| C | 3900 | 120.0 | 0.949 |

A measuring procedure of the friction is as follows. First, thirty reciprocations of running-in (in which a stroke is 6 mm, and a frequency is 0.17 Hz) are executed, and a data acquisition is executed at a time when a friction force becomes stable at a predetermined cycle number after leaving for three minute. Hereinafter, a stroke in which the D-ring makes a movement toward the lubricating fluid is called as a pumping stroke, and the reverse is called as a motoring stroke. Further, a lubricating character figure G affecting the friction property and an average friction coefficient fc in a center of the stroke are defined as follows.

$$G = \eta(S\pi v)/(Pr/L)$$

$$fc = Fc/Pr$$

$\eta$: lubricating fluid viscosity (Pa·s), S: stroke (m), v: cycle number (1/s), L: shaft peripheral length (m), Pr: tension force (N), Fc: friction force (N) in center of stroke

2-2) Test sample

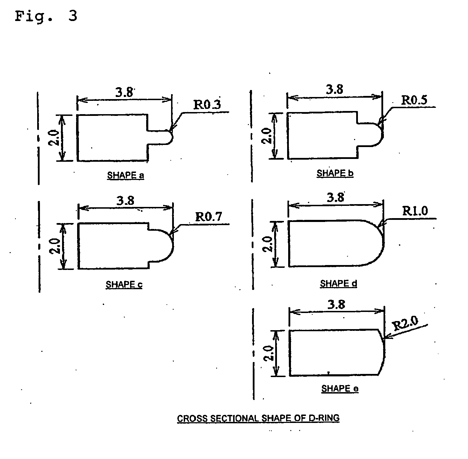

D-rings having five shapes shown in Fig. 3 are used as the D-ring for the reciprocating movement. An inner diameter of the D-ring is set to $\phi50$ in any shapes. A material of the D-ring is constituted by an ACM rubber material, and a physical property value thereof is shown in Table 2.

Table 2. D-ring material

| Items | Physical property value |
|------|------|
| Hardness (IRHD) | 70 |
| Tensile strength (MPa) | 11.8 |
| Elongation (%) | 190 |
| Specific gravity | 1.31 |

3) Experimental result and consideration

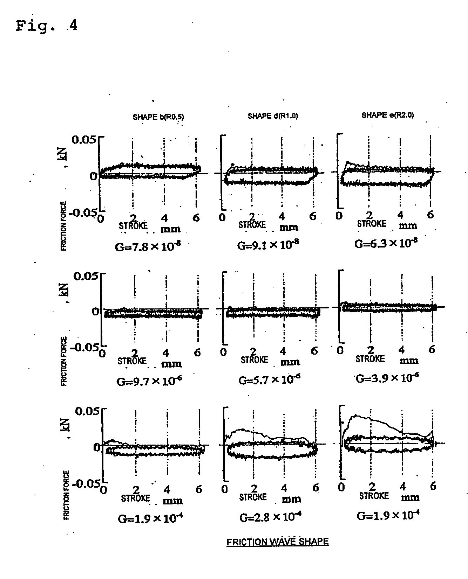

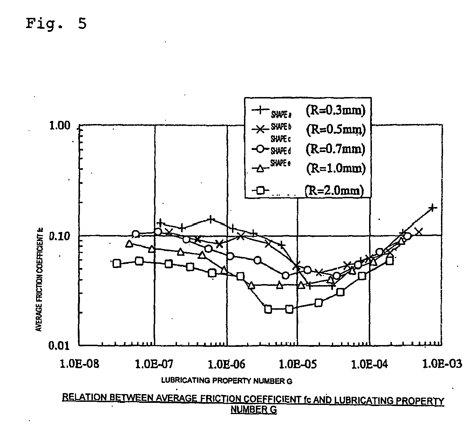

Fig. 4 shows a typical friction wave shape in each of the lubricating property numbers. Fig. 5 shows a relation between an average friction coefficient fc and a lubricating property number G in a center of the stroke.

The average friction coefficient fc is reduced in a region in which the value G is small ($G < 10^{-6}$), with respect to an increase of G, is increased in a region in which the value G is large ($G > 10^{-4}$), and shows a minimum value in a region $10^{-6} < G < 10^{-4}$. The value G showing the minimum value is called as a critical lubricating property number, and this value is approximately shown as follows with respect to each of the seal shapes by using Gc.

$$\text{Shape a (R = 0.3 mm): Gc = 3.0 x } 10^{-5}$$

$$\text{Shape b (R = 0.5 mm): Gc = 1.9 x } 10^{-5}$$

$$\text{Shape c (R = 0.7 mm): Gc = 6.9 x } 10^{-6}$$

$$\text{Shape d (R = 1.0 mm): Gc = 5.7 x } 10^{-6}$$

$$\text{Shape e (R = 2.0 mm): Gc = 3.9 x } 10^{-6}$$

In other words, the value G is reduced in accordance with an increase of a radius of curvature R of the leading end of the D-ring corresponding to a contact portion.

In the region G > Gc, a relation $fc \propto G^{\frac{1}{2}}$ is recognized. Further, the friction wave shape shows a maximum value in the center portion of the stroke (refer to Fig. 4). These features show that a fluid lubrication is dominant in this region.

In the region in which the fluid lubrication is dominant, the average friction coefficient fc depends on the radius of curvature R of the leading end of the D-ring corresponding to the contact portion, and there is a tendency that the average friction coefficient fc is reduced by the influence of a fluid wedge effect in accordance with an increase of R, however, a decreasing rate is not significant. This is considered to be generated because an increase of a film thickness reduces the influence of the radius of curvature R.

On the contrary, in the region G < Gc, there is considered that a direct contact is generated in the contact surface. However, the average friction coefficient fc in the region $G < 1.0 \times 10^{-5}$ shows a tendency of being smaller in accordance with an increase of the radius of curvature R of the leading end of the D-ring corresponding to the contact portion. This is considered to be generated because the fluid wedge effect is significantly applied even if the contact exists in time and space in accordance with the increase of the radius of curvature R of the leading end of the D-ring.

In other words, it is concluded that it is possible to easily form an oil film by increasing the radius of curvature R of the leading end of the D-ring, and it is possible to lower the average friction coefficient in all the region G.

4) Conclusion

The friction property (Stribeck curve) of the D-ring for the reciprocating movement is considered by changing the radius of curvature r of the leading end of the D-ring. The results can be arranged as follows.

4-1) In the region G > Gc, the relation $fc \propto G^{1/2}$ is obtained. The average friction coefficient fc is lowered in accordance with the increase of the radius of curvature R of the leading end of the D-ring, however, a degree thereof is not significant.

4-2) The value Gc and the average friction coefficient fc in G = Gc become smaller in accordance with the increase of the radius of curvature R of the leading end of the D-ring.

4-3) In the region G < Gc, the average friction coefficient fc becomes smaller in accordance with the increase of the radius of curvature R of the leading end of the D-ring.

As a result of the research mentioned above, with regard to the circular arc shape (R shape) of the sliding portion in the leading end of the sealing ring, it is found that the "fluid wedge effect" is significantly applied so as to easily form the oil film, and the friction is reduced, in accordance with the increase of the radius of curvature R.

In the description mentioned above, "shape d" in Fig. 3 corresponds to a conventionally known D-ring shape (R = A/2). Accordingly, the average friction coefficient fc becomes smaller by making the radius of curvature R larger than the "shape d", as shown in "shape e" in Fig. 3 (Fig. 5).

In this case, an upper limit value of the radius of curvature R is set to $R < 13A^2$ because the solely increasing radius of curvature R forms a shape boundlessly coming close to a so-called square ring having a rectangular cross section, and if the radius of curvature R is over the upper limit, the "fluid wedge effect" is not applied, and the ring does not function as the reciprocating seal. Accordingly, the limit value mentioned above is set.

As described above, in accordance with the sealing ring of the present invention, it is possible to reduce the friction force in the reciprocating movement, and it is possible to improve the durability, whereby it is possible to contribute to the resource saving and the energy saving corresponding to the desired object.

Embodiment

As is apparent from the description mentioned above, the "shape e" in Fig. 3 is suitable for the embodiment in accordance with the present invention. Describing the contents thereof repeatedly, the sealing ring 21 is structured as follows.

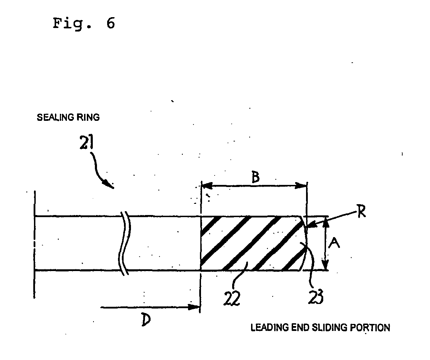

In other words, as shown in Fig. 6, the sealing ring 21 is formed in a circular ring shape having a D-shaped cross section by using an ACM rubber material as a molding material, and a leading end sliding portion 23 formed in a circular arc shape is integrally formed in an outer peripheral surface of a base portion 22 formed in a rectangular cross sectional shape. An inner diameter D of the ring 21 is set to 50 mm, a width A in an axial direction is set to 2.0 mm, a width in a diametrical direction is set to 3.8 mm, and a radius of curvature R of the leading end sliding portion 23 is set to 2.0 mm which is equal to the width A in the axial direction, which belong to the range in the formula (1) mentioned above.

**Claims**

1. A sealing ring (21) for a reciprocating movement, held by one of two members which move with respect to each other, slidably closely contacting the other member, and having a tip sliding portion (23) slidably closely contacting the other member and having a circular sectional shape, wherein assuming a curvature radius of the tip sliding portion (23) is R, and an axial-direction width of the sealing ring (21) is A, the sealing ring has a shape which satisfies the following relation: $A/2 < R < 13A^2$.

Fig. 1

Fig. 2

Fig. 3

3.8    R0.3
2.0
SHAPE a

3.8    R0.5
2.0
SHAPE b

3.8    R0.7
2.0
SHAPE c

3.8    R1.0
2.0
SHAPE d

3.8    R2.0
2.0
SHAPE e

CROSS SECTIONAL SHAPE OF D-RING

Fig. 4

FRICTION WAVE SHAPE

Fig. 5

RELATION BETWEEN AVERAGE FRICTION COEFFICIENT fc AND LUBRICATING PROPERTY NUMBER G

Fig. 6

SEALING RING

21

B

R

A

22

23

D

LEADING END SLIDING PORTION

**European Patent
Office**

## EUROPEAN SEARCH REPORT

Application Number

EP 05 02 2078

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 32 17 183 A1 (FRITZ BAUER + SOEHNE OHG) 3 February 1983 (1983-02-03) * page 6, lines 1-12 * * figures 1,2 * | 1 | F16J15/32 F16J15/56 F04B53/14 |
| X | FR 2 496 820 A (STOLL KURT) 25 June 1982 (1982-06-25) * page 1, lines 13-17 * * page 4, lines 30-33 * * figures 2,3 * | 1 | |
| X | US 3 336 033 A (BALDWIN PHILIP SIDNEY) 15 August 1967 (1967-08-15) * column 1, line 68 - column 2, line 3 * * figure 1 * | 1 | |
| X | US 2 727 797 A (SNYDER ROBERT E) 20 December 1955 (1955-12-20) * column 5, lines 11-20 * * figure 3 * | 1 | |
| X | US 2 565 042 A (PHILLIPS HAROLD P) 21 August 1951 (1951-08-21) * claim 6 * * figure 4 * | 1 | TECHNICAL FIELDS SEARCHED (IPC) F16J F04B |

The present search report has been drawn up for all claims

| Place of search | Date of completion of the search | Examiner |
|---|---|---|
| The Hague | 9 December 2005 | Van Wel, O |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...............................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 05 02 2078

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2005

| Patent document cited in search report | | Publication date | Patent family member(s) | | Publication date |
|---|---|---|---|---|---|
| DE 3217183 | A1 | 03-02-1983 | NONE | | |
| FR 2496820 | A | 25-06-1982 | DE<br>NL | 3048397 A1<br>8105112 A | 01-07-1982<br>16-07-1982 |
| US 3336033 | A | 15-08-1967 | ES<br>GB | 293458 A1<br>1010003 A | 01-04-1964<br>17-11-1965 |
| US 2727797 | A | 20-12-1955 | NONE | | |
| US 2565042 | A | 21-08-1951 | NONE | | |

EPO FORM P0459

For more details about this annex : see Official Journal of the European Patent Office, No. 12/82